# EUROPÄISCHE PATENTSCHRIFT

(11) **EP 0 638 985 B1**
(45) Veröffentlichungstag und Bekanntmachung des Hinweises auf die Patenterteilung: **06.11.1996**
(21) Anmeldenummer: 93113021.5
(22) Anmeldetag: 13.08.1993
(51) Int. Cl.: H02M 3/335

(54) **Gleichspannungsumrichter**
DC-DC converter
Convertisseur continu - continu

(43) Veröffentlichungstag der Anmeldung: 15.02.1995
(73) Patentinhaber: SIEMENS AKTIENGESELLSCHAFT, 80333 München (DE)
(72) Erfinder: Berthe, Rolf Dr. Dipl.-Phys., D-91388 München (DE); Kramer, Karl-Heinx, D-82538 Gretsried (DE)

(56) Entgegenhaltungen:
- EP-A- 0 192 540
- EP-A- 0 404 993
- DE-A- 2 838 009
- DE-A- 3 237 312

## Beschreibung

Die Erfindung bezieht sich auf einen wie im Oberbegriff des Patentanspruchs 1 angegebenen Gleichspannungsumrichter.

Ein derartiger Gleichspannungsumrichter ist bereits aus der DE-AS 28 38 009 bekannt. Der bekannte Gleichspannungsumrichter enthält eine Strombegrenzungsschaltung mit einer ersten Anordnung zur Strombegrenzung durch Verringerung des Tastgrades der Steuerimpulse und mit einer zweiten Anordnung zur Strombegrenzung durch Unterdrückung von Steuerimpulsen. Als Stromsensor dient ein Stromwandler mit Bürdenwiderstand. Die am Bürdenwiderstand zur Verfügung stehende Meßspannung wird mit Hilfe eines Dämpfungsgliedes von den Anfangsstromspitzen befreit. Die so gewonnene Meßspannung wird mit einer Hilfsspannung verglichen. Die Differenz aus Meßspannung und Hilfsspannung liegt an der Basis-Emitterstrecke eines Transistors, der bei seinem Ansprechen über eine Steuer- und Regelschaltung die Sperrung des Leistungsschalters auslöst.

Die bei dem bekannten Gleichspannungsumrichter ferner vorgesehene zweite Anordnung zur Strombegrenzung ist über eine Diode an den Bürdenwiderstand angeschlossen. Auch bei dieser Anordnung wird eine Differenz aus der Meßspannung und einer Hilfsspannung der Basis-Emitterstrecke eines Transistors zugeführt. Die Meßspannung ist allerdings um die Schwellenspannung der Diode kleiner als die Meßspannung der ersten Vorrichtung zur Strombegrenzung.

Die Hilfsspannung wird mit Hilfe eines Gleichstromumrichters mit kleiner Ausgangsleistung aus einem zusätzlichen Ausgangskreis des Hauptkreis-Gleichstromumrichters gewonnen. Die zweite Meßschaltung greift nur ein, wenn die Mindesteinschaltzeit des Schalttransistors unterschritten werden müßte, d.h. nur bei höherer Eingangsspannung und stärkerer Überlast bis Kurzschluß. Sie setzt bei ansteigender Ausgangsspannung nach Wegfall des Kurzschlusses sofort wieder aus. Die Ansprechgrenze der Strommeßschaltungen bei Überlast kann zurückgesetzt werden, so daß die Strombelastung bei Kurzschluß kaum größer als bei Nennlast ist. Dies wird dadurch erreicht, daß sich die Hilfsspannung gleichsinnig mit der Ausgangsspannung ändert und von beiden Strommeßwerten subtrahiert wird.Sinkt die Ausgangsspannung im Kurzschlußfall ab, so wird die Hilfsspannung UH2 ebenfalls reduziert, so daß die beiden Anordnungen zur Strombegrenzung bereits bei kleineren Strommeßwerten ansprechen.

Die Steuer- und Regelschaltung ist an den Ausgang des Gleichstromumrichters angeschlossen. Zur Regelung der Ausgangsspannung wird der Tastgrad in der Weise verändert, daß bei steigender Ausgangsspannung der Tastgrad und damit die Einschaltzeit verkürzt wird. Zu diesem Zweck ist die Steuer- und Regelschaltung an den Ausgang des Gleichstromumrichters angeschlossen. Über die Art der Spannungsregelschaltung ist nichts ausgesagt.

Aufgabe der Erfindung ist es, einen Gleichspannungsumrichter der eingangs genannten Art derart auszubilden, daß die gewünschte rückführende Ausgangskennlinie im Strombegrenzungsfall mit Hilfe einer einfach realisierbaren und möglichst zuverlässigen Komparatoranordnung, insbesondere in Verbindung mit einer Regelung der Ausgangsspannung auf einen konstanten Wert erzielt wird.

Gemäß der Erfindung wird der Gleichspannungsumrichter zur Lösung dieser Aufgabe in der im kennzeichnenden Teil des Patentanspruchs 1 angegebenen Weise ausgebildet.

Durch diese Maßnahmen ergibt sich in vorteilhafter Weise eine Komparatoranordnung, bei der sich die unterschiedlichen Ansprechschwellen der beiden Vorrichtungen zur Strombegrenzung mit Hilfe ein- und desselben Spannungsteilers realisieren lassen.

Die Maßnahmen nach Anspruch 2 sind bei einem Gleichspannungsumrichter mit Voltage-Mode-Regelung, die Maßnahmen nach Anspruch 3 bei einem Gleichspannungsumrichter mit Current-Mode-Regelung von Vorteil.

Weitere Ausgestaltungen der Erfindung gehen aus den Ansprüchen 4 bis 7 hervor.

Die Erfindung wird anhand der in den Figuren dargestellten Ausführungsbeispiele näher erläutert.

Es zeigen
- Fig. 1: einen Durchflußumrichter mit Regelung der Ausgangsspannung und einer ersten und zweiten Anordnung zur Strombegrenzung,
- Fig. 2: eine Abwandlung des Gleichstromumrichters nach Fig. 1,
- Fig. 3: einen Gleichspannungsumrichter mit Spannungsregelung durch unterlagerte Stromregelung und mit einer ersten und zweiten Anordnung zur Strombegrenzung und
- Fig. 4: eine Abwandlung des Durchflußumrichters nach Fig. 3. Die
- Fig. 5 und 6: zeigen Spannungsdiagramme für den Gleichspannungsumrichter nach Fig. 3, und zwar

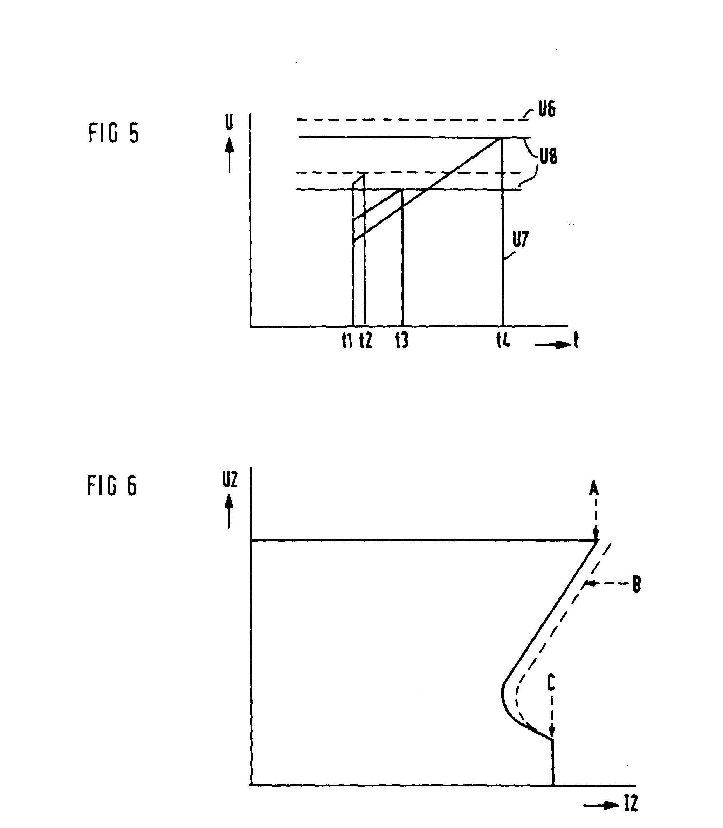

- Fig. 5: die Spannungsverhältnisse am Komparatoreingang der Steuerschaltung für den Fall der Strombegrenzung und

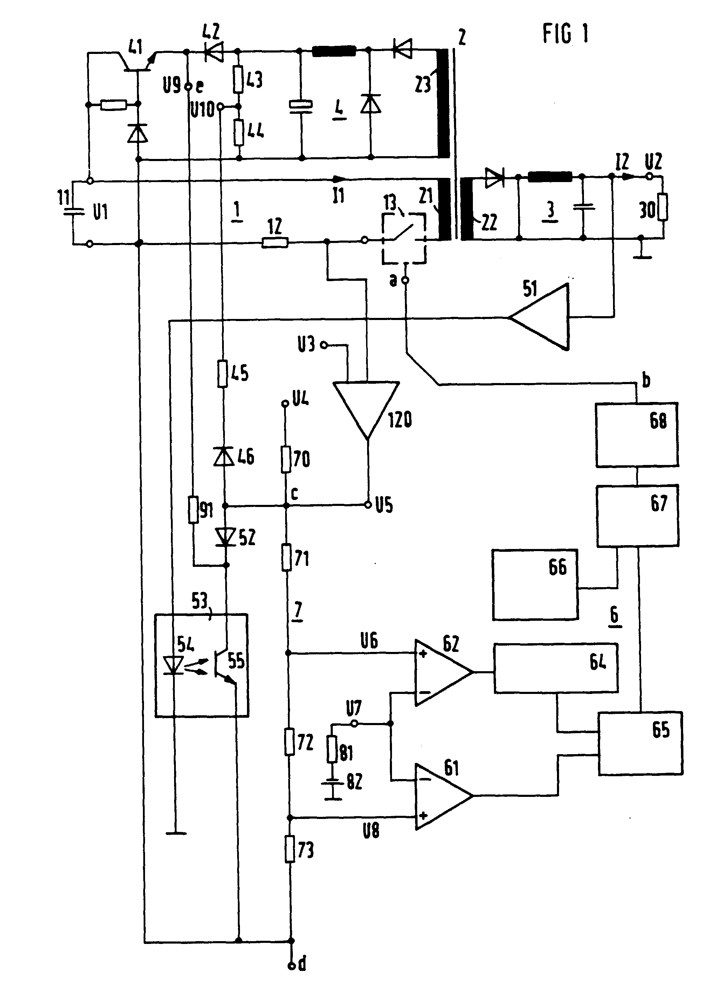

- Fig. 6: eine rückziehende Ausgangskennlinie für die in den Figuren 1 bis 4 gezeigten Durchflußumrichter.

Bei dem in Fig. 1 gezeigten Durchflußumrichter verläuft der primärseitige Hauptstromkreis 1 vom Eingang für die Gleichspannung U1 der Gleichspannungsquelle 11 über die Primärwicklung 21 des Transformators 2, den elektronischen Schalter 13 und den als Stromsensor dienenden Strommeßwiderstand 12 zurück zur Gleichspannungsquelle 11.

Der sekundärseitige Hauptstromkreis 3 verläuft vom einen Ende der Sekundärwicklung 22 des Transformators 2 über eine Gleichrichterdiode und eine Drossel zu dem gegenüber Bezugspotential Spannung führenden Ausgangsanschluß. In einem auf die Gleichrichterdiode folgenden Querzweig ist eine Freilaufdiode angeordnet. In einem auf die Drossel folgenden Querzweig befindet sich ein Speicherkondensator, an dem die Ausgangsspannung U2 auftritt.

Der elektronische Schalter 13 ist mit seinem Steuereingang a an den Steuerausgang b der Steuerschaltung 6 angeschlossen. Insbesondere wird ein Feldeffekttransistor als Leistungsschalter verwendet. Der elektronische Schalter 13 wird mit Hilfe der Steuervorrichtung 6 mittels Einschaltimpulsen periodisch leitend gesteuert und bildet das Stellglied einer Regelstrecke.

An die Tertiarwicklung 23 des Übertragers 2 ist zusätzlich zum sekundärseitigen Hauptstromkreis 3 der weitere Ausgangskreis 4 angeschlossen. Der Ausgangskreis 4 ist dem sekundärseitigen Hauptstromkreis 3 nachgebildet und liefert eine der Ausgangspannung U2 annähernd proportionale Gleichspannung.

Der Anschluß e für die Hilfsspannung U9 ist über die Entkopplungsdiode 42 an den Ausgang des Ausgangskreises 4 und über den Transistor 41 an die Eingangsgleichspannungsquelle 11 angeschlossen. Nach dem Einschalten des Durchflußumrichters und bei Kurzschluß des Ausgangskreises wird die Hilfsspannung U9 über den leitenden Transistor 41 der Eingangsspannungsquelle 11 entnommen. Im eingeschwungenen Zustand und bei Nennbetrieb ist die Ausgangsspannung des Ausgangskreises 4 größer als die über den Transistor 41 zugeführte Spannung, so daß die Diode 42 leitet und die Speisung der Hilfsspannung U9 übernimmt.Aus der Hilfsspannung U9 werden die Komponenten der Steuerschaltung 6 versorgt.

Die Steuerschaltung 6 enthält den Taktgeber 66, der Taktimpulse fester Impulsfolgefrequenz an den Pulsdauermodulator 67 abgibt. Mit Hilfe des Pulsdauermodulators 67 werden die Taktimpulse hinsichtlich ihrer Dauer moduliert. Die Dauer der Einschaltimpulse, die über den Treiber 68 an den Steuereingang des elektronischen Schalters 13 gelangen, wird vom Abschalt-Flip-Flop 65 bestimmt. Das Abschalt-Flip-Flop 65 wird sowohl mittels des Komparators 61 als auch mittels des Komparators 62 und der daran angeschlossenen Impulsauslassungsschaltung 64 gesteuert.

Der Komparator 61 bildet eine erste Anordnung zur Strombegrenzung. Eine zweite Anordnung zur Strombegrenzung ist durch den Komparator 62 und die Impulsauslassungsschaltung 64 gebildet. Die erste Anordnung zur Strombegrenzung dient zur Begrenzung des im primärseitigen Hauptstromkreis 1 fließenden Pulsstromes durch Verringerung des Tastgrades der Steuerrimpulse, die zweite Anordnung zur Strombegrenzung durch Unterdrückung von Steuerimpulsen.

An den Ausgang des Durchflußumrichters ist der Spannungsregler 51 angeschlossen. Am Ausgang des Spannungsreglers 51 liegt die lichtemittierende Diode 54 des Optokopplers 53. Der Fototransistor 55 des Optokopplers 53 ist emitterseitig an das primärseitige Bezugspotential und kollektorseitig über den Widerstand 91 an die Hilfsspannung U9 gelegt. Die Diode 52 und der Widerstand 91 ermöglichen im Übergangsbereich von der Spannungsregelung zur Strombegrenzung eine besonders exakte Dimensionierung. Im Strombegrenzungsfall geht der Fototransistor 55 von einem über den Widerstand 91 noch vorhandenen Strom sprunghaft in den Sperrbereich über. Die Diode 52 dient dabei als Entkopplungsdiode.

Die aus dem Fototransistor 55 des Optokopplers 53 und der Diode 54 bestehende Serienschaltung liegt parallel zum Spannungsteiler 7, der aus einer Serienschaltung der Widerstände 71, 72 und 73 besteht. Somit liegt parallel zum Spannungsteiler 7 der Ausgang des durch den Spannungsregler 51 steuerbaren Optokopplers 53.

Der Spannungsteiler 7 liegt mit seinem einen Ende am Ausgang d für das primärseitige Bezugspotential. Sein anderes Ende ist über den Widerstand 70 an die Konstantspannung U4 angeschlossen. Dabei ist der Widerstand 73 auf der einen Seite mit dem Anschluß d verbunden. Das andere Ende des Widerstandes 73 führt gegenüber dem primärseitigen Bezugspotential die Spannung U8 und ist mit dem einen Ende des Widerstandes 72 und dem nicht invertierenden Eingang des Komparators 61 verbunden. Das andere Ende des Widerstandes 72 führt die Spannung U6 gegenüber dem primärseitigen Bezugspotential und ist mit dem nicht invertierenden Eingang des Komparators 62 und dem einen Ende des Widerstandes 71 verbunden. Das andere Ende des Widerstandes 71 liegt am Anchluß c und führt gegenüber dem primärseitigen Bezugspotential die Spannung U5.

Die nicht invertierenden Eingänge der beiden Komparatoren 61 und 62 liegen somit an verschiedenen Abgriffen des gemeinsamen Spannungsteilers 7.

Die invertierenden Eingänge der Komparatoren 61 und 62 sind miteinander verbunden und führen die Sollwertspannung U7. Als Quelle für die Sollwertspannung U7 dient die aus der Konstantspannungsquelle 82 und der Sägezahnspannungsquelle 81 bestehende Serienschaltung.

Der Anschluß c des Spannungsteilers 7 ist ferner über die aus dem Widerstand 45 und der Entkopplungsdiode 46 bestehende Serienschaltung an den am Ausgang des Ausgangskreises 4 liegenden Spannungsteiler 43, 44 angeschlossen. Im Kurzschlußfall sinkt die Spannung U10 so weit ab, daß die Diode 46 leitend und die Spannung U5 verringert wird. Die Spannung U10 ändert sich gleichsinnig mit der Ausgangsspannung U2 des Gleichspannungsumrichters. Diese sich gleichsinnig mit der Ausgangsspannung U2 ändernde Spannung U10 ist ein vorgegebener Bruchteil der Ausgangsspannung des zusätzlichen Ausgangskreises 4.

Der Anschluß c des Spannungsteilers 7 liegt außerdem am Ausgang der aus dem Strommeßwiderstand 12 und dem daran angeschlossenen Operationsverstärker 120 bestehenden Strommeßschaltung.

Der Operationsverstärker 120 nimmt einen Sollwert-Istwert-Vergleich vor. Wird die Amplitude des Primärstromes I1 so groß, daß die Referenzspannung U3 überschritten wird, so geht der Ausgang kontinuierlich in den Zustand Low über. Der Operationsverstärker 120 verringert so die konstante Spannung U5 auf einen kleineren Wert.

Bei dem Gleichspannungsumrichter nach Fig. 1 wird der im primärseitigen Hauptstromkreis 1 liegende elektronische Schalter 13 mittels der Steuerschaltung 6 gesteuert. Der Komparator 61 der Steuerschaltung 6 vergleicht die Referenzspannung U7 der Referenzspannungsquelle 81, 82 mit der Spannnung U8, die am Widerstand 73 des Spannungsteilers 7 abfällt. Da der Fototransistor 55 parallel zur Serienschaltung der Widerstände 71 bis 73 des Spannungsteilers liegt, ist die Spannung U8 von der Stellung des Reglers 51 abhängig. Der Schnittpunkt beider Spannungen U7 und U8 liefert das jeweilige Abschaltsignal für den elektronischen Schalter 13.

Zweckmäßigerweise ist die Referenzspannung U7 eine der Eingangsspannung U1 proportionale Konstantspannung mit überlagerter Sägezahnspannung, so daß sowohl eine Störgrößenaufschaltung bezüglich der Eingangsspannung U1 erfolgt als auch definierte Schnittpunkte erzielt werden. Die Sägezahnspannung hat eine konstante Impulsfolgefrequenz und eine konstante Amplitude. Diese fest vorgegebene Spannungsrampe dient als Referenz für die Regelung, auch im Falle der Strombegrenzung.

Im Normalbetrieb wird zum Zwecke der Spannungsregelung die reglerstellungsabhängige Spannung U8 so lange verstellt, bis die Spannungen U7 und U8 miteinander übereinstimmen.

Wird der Wert des Lastwiderstandes 30 kleiner, so steigen der Ausgangsstrom I2 und der Eingangsstrom I1 an und die Ausgangsspannung U2 wird über den Regler 51, den Optokoppler 53 und den Komparator 61 zunächst aufrecht erhalten, da der Fototransistor 55 mehr in den Sperrbereich gesteuert wird. Bei weiterer Verringerung des Lastwiderstandes 30 ist der Fototranistor 55 schließlich so hochohmig, daß die Spannung am Pluseingang des Komparators 61 durch die konstante Spannung U4 bestimmt wird. Die Ausgangsspannung U2 kann damit nicht mehr konstant gehalten werden und die erste Strombegrenzung setzt ein. Die Ausgangsspannung U2 sinkt ab.

Wird die Last weiter in Richtung Kurzschluß verringert, so ist der den elektronischen Schalter bildende Transistor oder Feldeffekttransistor nicht mehr in der Lage, kürzere Einschaltzeiten zu realisieren. Die Amplitude des Primärstromes steigt weiter an. Die Spannung am Spannungsteiler 7 wird durch den an seinem Ausgang niederohmiger werdenden Operationsverstärker 120 reduziert, so daß auch die Spannung U6 unter den Wert der Sägezahnspannung U7 absinkt. Dadurch werden Impulse ausgelassen, d.h. nicht jeder Arbeitstakt führt zur Einschaltung des Schalttransistors, sondern nur jeder n-te Impuls des Taktgebers 66 wird als Einschaltimpuls wirksam. Der Ausgangstrom kann somit nicht mehr weiter ansteigen.

Im Überlastfall wird der Laststrom I2 durch eine Verringerung der Dauer der den elektronischen Schalter 13 leitend steuernden Einschaltimpulse und damit des Tastgrades begrenzt. Das führt zu einem in erster Näherung linearen Absinken der Ausgangsspannung U2 mit zunehmendem Ausgangsstrom. Der Einsatzpunkt der ersten Strombegrenzung ist erreicht, wenn der Spannungsabfall an der Kollektor-Emitterstrecke des Fototransistors 55 so groß ist, daß die Entkopplungsdiode 52 keinen Strom mehr führt. Die am nicht invertierenden Eingang des Komparators 61 liegende Spannung U8 erlangt ihren höchsten und nun auch konstanten Wert.

Bei weiter ansteigendem Laststrom I2 kippt der Fototransistor 55 in den Sperrzustand und es verschiebt sich der Schnittpunkt der beiden Eingangsspannungen des Komparators 61 zu geringeren Einschaltzeiten. Die Ausgangspannung U2 wird dabei nahezu linear erniedrigt.

Totzeiten und andere Effekte, wie z.B. Abmagnetisierungsprobleme bei der Speicherdrossel, könnten insbesondere bei hohen Ausgangsspannungen U2 zu einem sehr viel stärker als linear anwachsendem Strom bei schon abgesenkter Ausgangspannung führen. Durch die zweite Strombegrenzung, die für ein periodisches Auslassen einzelner Einschaltimpulse beim Schalttransistor sorgt, wird solch ein weiteres Anwachsen des Stromes unterbunden.

Die für den Einsatzpunkt der Impulsauslassung maßgebliche Spannung U6 wird mit der Spannung U8 mitgeführt. Die Spannung U6 ist vorzugsweise etwa 20 % größer als die Spannung U8. Die zweite Strombegrenzung setzt daher im Vergleich zur ersten Strombegrenzung bei um etwa 20 % höheren Stromwerten ein. Mit Hilfe einer rückziehenden Kennlinie des Ausgangsstromes kann der Einsatzpunkt der Impulsauslassung vorzugsweise so dimensioniert werden, daß er bei abgefallener Spannung schon bei Strömen einsetzt, die noch unterhalb der Stromgrenze für die erste Strombegrenzung liegen.

Mit Hilfe der nachgeführten Impulsauslassung läßt sich der maximale Strom bei Klemmenkurzschluß durch geeignete Dimensionierung nahezu beliebig verringern, was insbesondere bei hohen Ausgangsspannungen von besonderem Vorteil ist.

Die rückziehende Ausgangskennlinie gemäß Fig. 6 wird dadurch erzeugt, daß bei Überlast zusätzlich die Spannung U5 am Spannungsteiler 7 mit Hilfe der Spannung U10 des Ausgangskreises 4 erniedrigt wird. Dies führt zu einer zusätzlich reduzierten Leistungsübertragung in den Sekundärkreis 3.

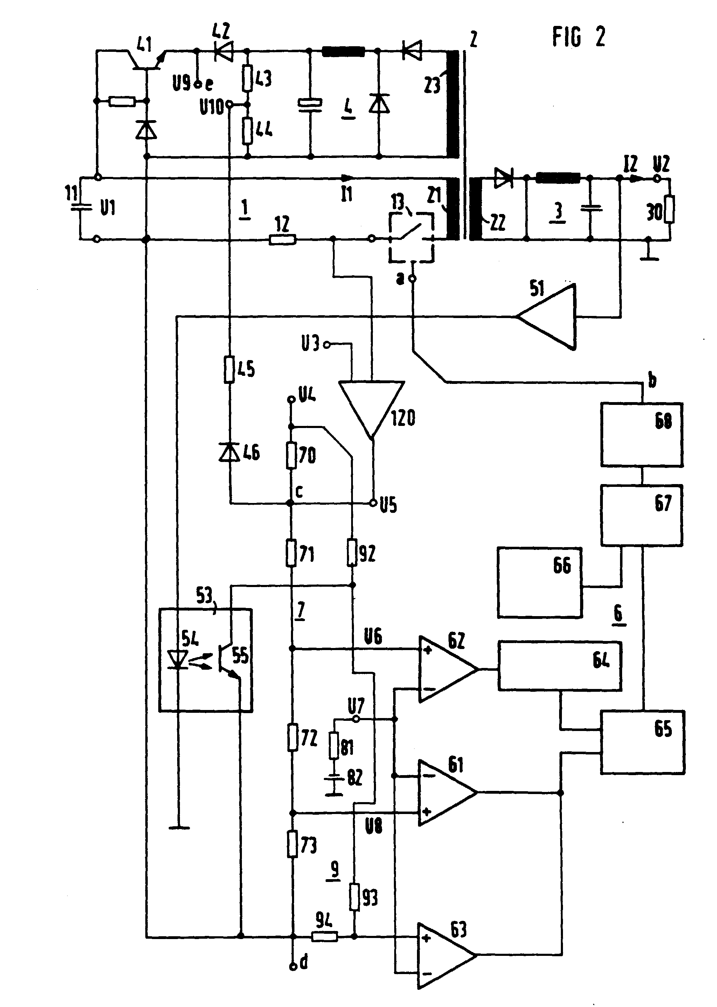

Der in Fig. 2 gezeigte Durchflußumrichter stimmt mit dem nach Fig. 1 weitgehend überein. Ein wesentlicher Unterschied besteht darin, daß zusätzlich zu den beiden Komparatoren 61 und 62 der Komparator 63 vorgesehen ist und daß der Komparator 63 mit seinem nicht invertierenden Eingang an einem eigenen Spannungsteiler 92, 93, 94 liegt. Der zusätzliche Komparator 63 dient ausschließlich zur Spannungsregelung. Der Komparator 61 ist daher nur Bestandteil der ersten Anordnung zur Strombegrenzung.Zusätzlich zum Spannungsteiler 7 ist der Spannungsteiler 9 vorgesehen, der aus den Widerständen 93 und 94 besteht. Der Verbindungspunkt der Widerstände 93 und 94 ist mit dem nicht invertierenden Eingang des Komparators 63 verbunden. Das dem Verbindungspunkt abgewandte Ende des Widerstandes 94 liegt am Anschluß d für das primärseitige Bezugspotential. Der dem Verbindungspunkt abgewandte Anschluß des Widerstandes 93 ist über den Widerstand 92 an die Konstantspannung U4 und unmittelbar an den Kollektor des Fototransistors 55 des Optokopplers 53 angeschlossen.

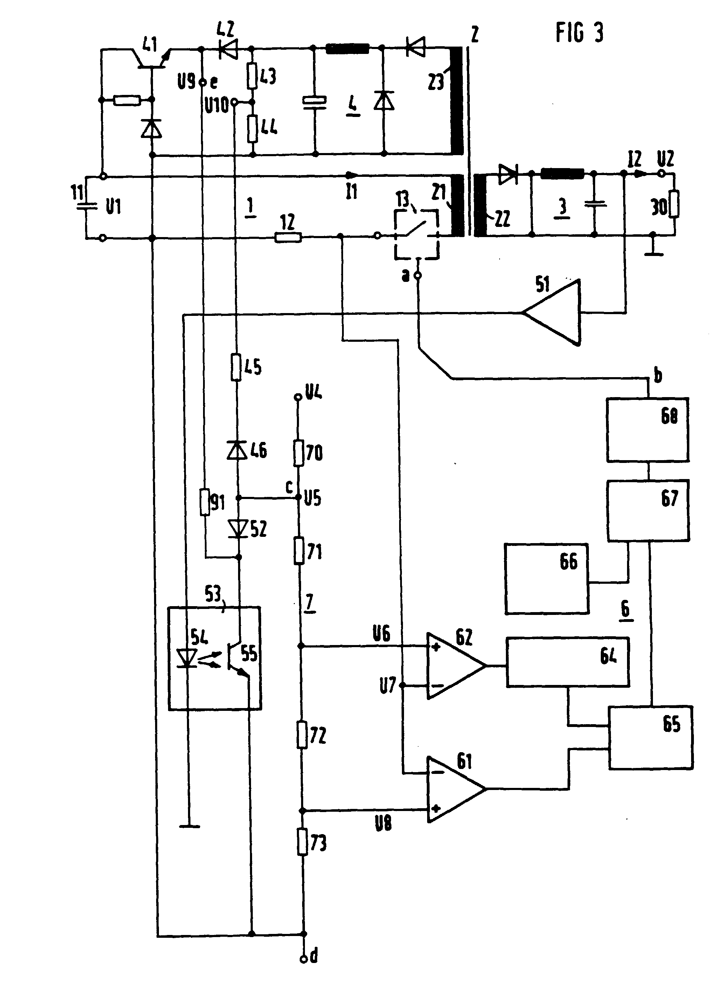

Fig. 3 zeigt einen Durchflußumrichter, der weitgehend mit dem nach Fig. 1 übereinstimmt. Ein wesentlicher Unterschied besteht allerdings darin, daß die Regelung der Ausgangsspannung auf einen konstanten Wert mit Hilfe einer unterlagerten Stromregelung vorgenommen wird. Eine derartige Spannungsregelung wird auch als Current-Mode-Regelung bezeichnet. Als Sollspannung dient dabei eine Meßspannung, die dem Momentanwert des im primärseitigen Hauptstromkreis fließenden Stromes I1 proportional ist. An die Stelle der Sollspannungsquelle 81, 82 in Fig. 1 tritt dabei der Strommeßwiderstand 12. Ein weiterer wesentlicher Unterschied besteht darin, daß der Anschluß c des Spannungsteilers 7 nicht an eine Strommeßschaltung angeschlossen ist.

Im Normalbetrieb wird zum Zwecke der Spannungsregelung die reglerstellungsabhängige Spannung U8 so lange verstellt, bis der Wert der Stromrampe, d.h. der Spannung U7 erreicht ist.

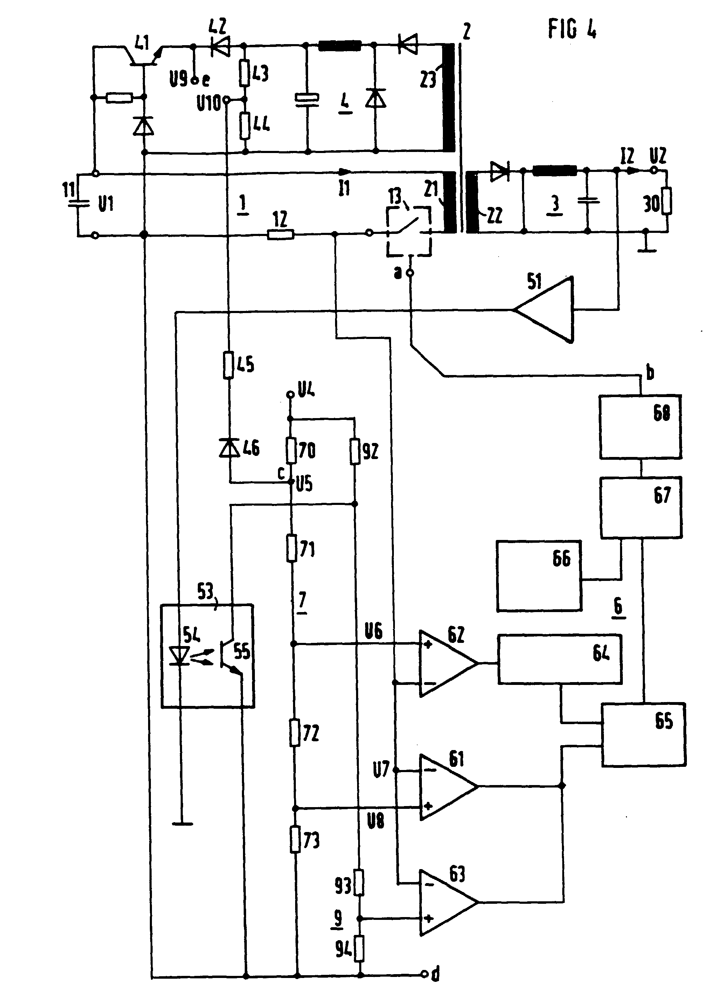

Fig. 4 zeigt einen Durchflußumrichter, der mit dem nach Fig. 3 weitgehend übereinstimmt. Abweichend ist der zusätzliche Komparator 63 vorgesehen, der ausschließlich zur Spannungsregelung dient. Der Komparator 61 ist daher nur Bestandteil der ersten Anordnung zur Strombegrenzung. Zusätzlich zum Spannungsteiler 7 ist der Spannungsteiler 9 vorgesehen, der aus den Widerständen 93 und 94 besteht.

Der Verbindungspunkt der Widerstände 93 und 94 ist mit dem nicht invertierenden Eingang des Komparators 63 verbunden. Das dem Verbindungspunkt abgewandte Ende des Widerstandes 94 liegt am Anschluß d für das primärseitige Bezugspotential. Der dem Verbindungspunkt abgewandte Anschluß des Widerstandes 93 ist über den Widerstand 92 an die Konstantspannung U4 und unmittelbar an den Kollektor des Fototransistors 55 des Optokopplers 53 angeschlossen.

Der Gleichspannungsumrichter nach Fig. 4 enthält mit dem Komparator 63 einen eigenen Komparator für die Spannungsregelung. Hierdurch läßt sich im Übergangsbereich von der Spannungsregelung zur Strombegrenzung ohne weitere Bauteile eine besonders exakte Dimensionierung erreichen. Der Widerstand 91 und die Diode 52 des Gleichspannungsumrichters nach Fig. 3 sind nicht erforderlich.

Figuren 5 und 6 zeigen Spannungsdiagramme für den Durchflußumrichter nach Fig. 3.

Aus Fig. 5 gehen die Spannungsverhältnisse am Eingang der Komparatoren 61 und 62 hervor. Innerhalb des Arbeitsbereiches der Spannungsregelung und der ersten Strombegrenzung spricht der Komparator 61, sobald die durch das Strommeßsignal gebildete Spannung U7 den Wert der Spannung U8 erreicht, der vom Spannungsregler 51 vorgegeben wird. Bei niedriger Eingangsspannung U1 und Nennbelastung ist die Spannung U8 relativ groß und der Einschaltimpuls dauert vom Zeitpunkt t1 bis zum Zeitpunkt t4. Bei hoher Eingangsspannung U1 und geringer Belastung ist der Wert der Spannung U8 kleiner und der Einschaltimpuls bereits zum Zeitpunkt t3 beendet. Im Falle der zweiten Strombegrenzung endet der Einschaltimpuls bereits zum Zeitpunkt t2. Dieser Zeitpunkt ist durch die Spannung U6 vorgegeben. Da die Spannung U6 mit der Spannng U8 mitgeführt wird, liegt sie im betrachteten Fall der zweiten Strombegrenzung nur geringfügig über dem Wert der Spannung U8.

Fig. 6 zeigt eine rückziehende Ausgangskennlinie und zwar die Ausgangsspannung U2 als Funktion vom Ausgangsstrom I2. Mit A ist der Einsatzpunkt der ersten Strombegrenzung bezeichnet. Die strichlierte Linie B entspricht der Komparatorschwelle für die zweite Strombegrenzung. C ist der Einsatzpunkt, zu dem mittels der zweiten Strombegrenzung Impulse ausgelassen werden.

## Patentansprüche

1. Gleichspannungsumrichter mit einem im primärseitigen Hauptstromkreis (1) angeordneten elektronischen Schalter (13) und mit einem in Serie zum elektronischen Schalter (13) angeordneten Stromsensor (12) einer Strommeßschaltung (12, 120) die anteine erste und zweite Anordnung zur Strombegrenzung einwirkt, wobei der elektronische Schalter (13) mit seinem Steuereingang (a) an einen Steuerausgang (b) einer Steuerschaltung (6) angeschlossen ist, die Steuerimpulse abgibt, mit Begrenzung des im primärseitigen Hauptstromkreis (1) fließenden Pulsstromes mittels der ersten Anordnung zur Strombegrenzung durch Verringerung des Tastgrades der Steuerimpulse und mit der zweiten Anordnung zur Strombegrenzung durch Unterdrückung von Steuerimpulsen,
**dadurch gekennzeichnet,**
daß die erste Anordnung zur Strombegrenzung einen ersten Komparator (61) und die zweite Anordnung zur Strombegrenzung einen zweiten Komparator (62) enthält, daß die invertierenden Eingänge der beiden Komparatoren (61, 62) an eine Sollspannungsquelle (U7) angeschlossen sind und daß die nicht invertierenden Eingänge der beiden Komparatoren (61, 62) an verschiedenen Abgriffen eines gemeinsamen Spannungsteilers (7) liegen, der von einer Spannungsquelle gespeist wird und daß eine sich mit der Ausgangsspannung (U2) des Gleichspannungsumrichters gleichsinnig ändernde Spannung (U10) an den Spannungsteiler (7) über ein gleichrichtendes Element (46) geführt ist.

2. Gleichspannungsumrichter nach Anspruch 1,
**dadurch gekennzeichnet**,
die Sollspannungsquelle (U7) eine Konstantspannungsquelle (81) enthält und daß der Spannungsteiler (7) zusätzlich an den Ausgang der Strommeßschaltung (12, 120) angeschlossen ist.

3. Gleichspannungsumrichter nach Anspruch 1,
**dadurch gekennzeichnet,**
daß die Sollspannungsquelle (U7) durch die Strommeßvorrichtung (12. 120) gebildet ist.

4. Gleichspannungsumrichter nach einem der Ansprüche 1 bis 3,
**dadurch gekennzeichnet,**
daß der Eingang des Spannungsteilers (7) über einen Widerstand (70) an eine konstante Hilfsspannung (U4) angeschlossen ist.

5. Gleichspannungsumrichter nach Anspruch 1 oder 2,
**dadurch gekennzeichnet,**
daß parallel zum Spannungsteiler (7) der Ausgang eines durch einen Spannungsregler (51) steuerbaren Optokopplers (50) liegt.

6. Gleichspannungsumrichter nach einem der Ansprüche 1 bis 5,
**dadurch gekennzeichnet,**
daß die sich gleichsinnig mit der Ausgangsspannung (U2) ändernde Spannung (U10) wenigstens ein vorgegebener Bruchteil der Ausgangsspannung eines zusätzlichen Ausgangskreises (4) ist.

7. Gleichspannungsumrichter nach einem der Ansprüche 1 bis 6,
**dadurch gekennzeichnet,**
daß die sich gleichsinnig mit der Ausgangsspannung (U2) ändernde Spannung (U10) dem Spannungsteiler (7) über eine aus einem Widerstand (45) und dem gleichrichtenden Element, das eine Entkopplungsdiode (46) ist, bestehende Serienschaltung zugeführt ist.

## Claims

1. DC/DC converter having an electronic switch (13) which is arranged in the main circuit (1) on the primary side and having a current sensor (12), which is arranged in series with the electronic switch (13), of a current measuring circuit (12, 120) which acts on a first and a second arrangement for current limiting, the electronic switch (13) being connected by its control input (a) to a control output (b) of a control circuit (6) which emits control pulses, with the pulse current flowing in the main circuit (1) on the primary side being limited by means of the first arrangement for current limiting by reducing the duty ratio of the control pulses and by the second arrangement for current limiting by suppression of control pulses, characterized in that the first arrangement for current limiting contains a first comparator (61) and the second arrangement for current limiting contains a second comparator (62), in that the inverting inputs of the two comparators (61, 62) are connected to a reference voltage source (U7) and in that the noninverting inputs of the two comparators (61, 62) are connected to various pick-offs of a common voltage divider (7) which is fed from a voltage source, and in that a voltage (U10) which changes in the same sense as the output voltage (U2) of the DC/DC converter is fed to the voltage divider (7) via a rectifying element (46).

2. DC/DC converter according to Claim 1, characterized in that the reference voltage source (U7) contains a constant voltage source (81), and in that the voltage divider (7) is additionally connected to the output of the current measuring circuit (12, 120).

3. DC/DC converter according to Claim 1, characterized in that the reference voltage source (U7) is formed by the current measuring device (12, 120).

4. DC/DC converter according to one of Claims 1 to 3, characterized in that the input of the voltage divider (7) is connected via a resistor (70) to a constant auxiliary voltage (U4).

5. DC/DC converter according to Claim 1 or 2, characterized in that the output of an optocoupler (50), which can be controlled by a voltage regulator (51), is connected in parallel with the voltage divider (7).

6. DC/DC converter according to one of Claims 1 to 5, characterized in that the voltage (U10) which changes in the same sense as the output voltage (U2) is at least a predetermined fraction of the output voltage of an additional output circuit (4).

7. DC/DC converter according to one of Claims 1 to 6, characterized in that the voltage (U10) which changes in the same sense as the output voltage (U2) is fed to the voltage divider (7) via a series circuit which comprises a resistor (45) and the rectifying element, which is a decoupling diode (46).

## Revendications

1. Convertisseur continu-continu comportant un interrupteur (13) électronique disposé dans le circuit primaire (1) de courant principal et, disposé en série avec l'interrupteur électronique (13), un capteur (12) de courant d'un circuit (12, 120) de mesure du courant, qui agit sur des premier et second dispositifs de limitation de courant, l'interrupteur (13) électronique étant connecté par son entrée (a) de commande à une sortie (b) de commande d'un circuit (6) de commande, qui fournit des impulsions de commande, avec limitation du courant impulsionnel passant dans le circuit (1) primaire de courant principal au moyen du premier dispositif de limitation de courant par diminution du taux d'impulsions des impulsions de commande et par le second dispositif de limitation de courant par suppression d'impulsions de commande,
caractérisé en ce que
le premier dispositif de limitation de courant comprend un premier comparateur (61) et le second dispositif de limitation de courant comprend un second comparateur (62), les entrées inverseuses des deux comparateurs (61, 62) sont connectées à une source (U7) de tension de consigne et les entrées non inverseuses des deux comparateurs (61, 62) sont reliées à des prises différentes d'un diviseur (7) de tension commun, qui est alimenté par une source de tension, et une tension (U10) variant dans le même sens que la tension (U2) de sortie du convertisseur continu-continu est appliquée au diviseur (7) de tension par l'intermédiaire d'un élément (46) redresseur.

2. Convertisseur continu-continu suivant la revendication (1),
caractérisé en ce que
la source (U7) de tension de consigne comprend une source (81) de tension constante et le diviseur (7) de tension est connecté en supplément à la sortie du circuit (12, 120) de mesure de courant.

3. Convertisseur continu-continu suivant la revendication 1,
caractérisé en ce que
la source (U7) de tension de consigne est formée par le dispositif (12, 120) de mesure de courant.

4. Convertisseur continu-continu suivant l'une des revendications 1 à 3,
caractérisé en ce que
l'entrée du diviseur (7) de tension est connectée par l'intermédiaire d'une résistance (70) à une tension (U4) auxiliaire constante.

5. Convertisseur continu-continu suivant la revendication 1 ou 2,
caractérisé en ce que
la sortie d'un optocoupleur (50) pouvant être commandé par un régulateur (51) de tension est en parallèle avec le diviseur (7) de tension.

6. Convertisseur continu-continu suivant l'une des revendications 1 à 5,
caractérisé en ce que
la tension (U10) changeant dans le même sens que la tension (U2) de sortie est au moins une fraction prescrite de la tension de sortie d'un circuit (4) supplémentaire de sortie.

7. Convertisseur continu-continu suivant l'une des revendications 1 à 6,
caractérisé en ce que
la tension (U10) variant dans le même sens que la tension (U2) de sortie est envoyée au diviseur (7) de tension par l'intermédiaire d'un circuit série constitué d'une résistance (45) et de l'élément redressant qui est une diode (46) de découplage.
